# EUROPÄISCHE PATENTSCHRIFT

(11) **EP 2 455 247 B1**
(45) Veröffentlichungstag und Bekanntmachung des Hinweises auf die Patenterteilung: **10.04.2013**
(21) Anmeldenummer: 10014787.5
(22) Anmeldetag: 19.11.2010
(51) Int. Cl.: B60J 7/19, B60J 7/043

(54) **Schiebedachsysteme**
Sliding roof systems
Systèmes de toit coulissant

(43) Veröffentlichungstag der Anmeldung: 23.05.2012
(73) Patentinhaber: Roof Systems Germany GmbH, 63128 Dietzenbach (DE)
(72) Erfinder: Grimm, Rainer, 60598 Frankfurt (DE); Vogel, Stefan, 63683 Ortenberg (DE)
(74) Vertreter: Prinz & Partner

(56) Entgegenhaltungen:
- EP-A1- 0 403 388
- EP-A1- 1 275 541
- DE-A1-102006 060 019

## Beschreibung

Die Erfindung betrifft ein Schiebedachsystem für ein Kraftfahrzeug, mit mindestens einer Führungsschiene, einem Deckelhalter, der relativ zur Führungsschiene verstellbar ist, und einem Schlitten, der in der Führungsschiene verschiebbar ist.

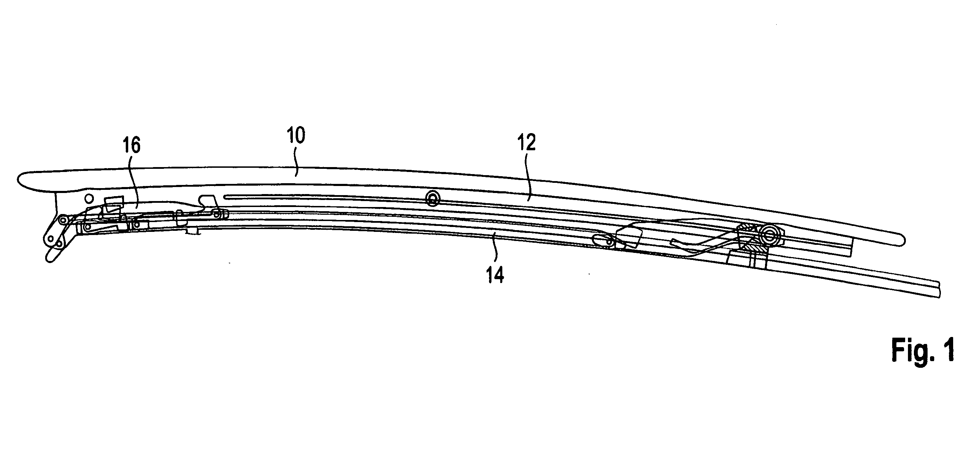

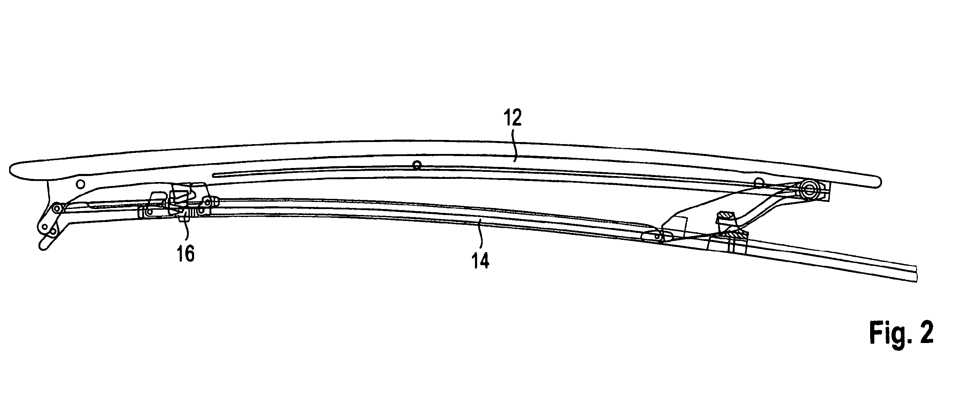

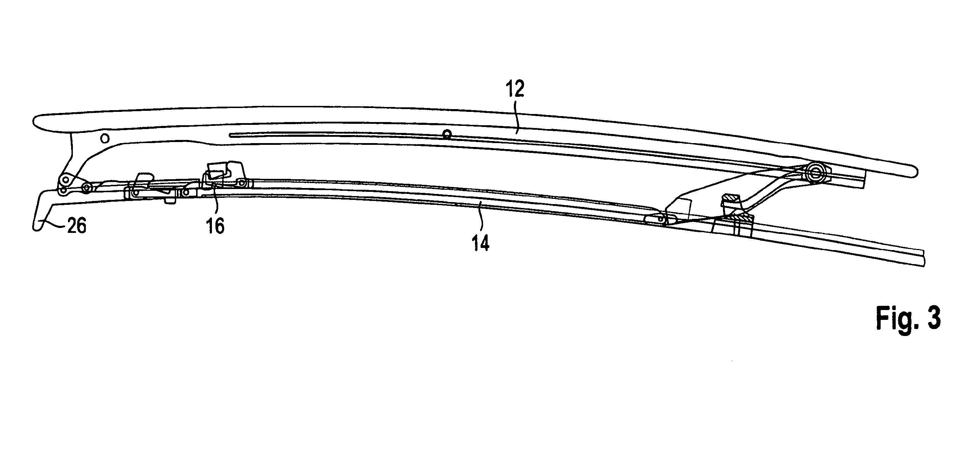

Ein Beispiel für ein solches Schiebedachsystem findet sich in der EP 2 072 304 A. Es dient dazu, einen Deckel 10 (siehe Figur 1) so an einem Fahrzeugdach anzubringen, dass der Deckel zwischen einer geschlossenen Stellung, in der er eine Öffnung im Fahrzeugdach verschließt, und verschiedenen mehr oder weniger vollständig geöffneten Stellungen verschoben werden kann. Der Deckel 10 ist an einem Deckelhalter 12 angebracht, der über verschiedene zwischengeschanete Bauteile verstellbar in einer Führungsschiene 14 aufgenommen ist. In der Praxis werden üblicherweise zwei Führungsschienen und dementsprechend zwei Deckelhalter verwendet, nämlich an den in Fahrtrichtung betrachtet seitlichen Rändern des Dachs. Zur Verstellung des Deckelhalters 12 ist ein Schlitten 16 vorgesehen, der verschiebbar in der Führungsschiene gelagert ist, von einem (nicht dargestellten) Antriebskabel verstellt wird und die Position des Deckelhalters 12 bestimmt. Durch Verschieben des Schlittens entlang der Führungsschiene 14 kann der Deckelhalter 12 und damit der Deckel 10 aus der in Figur 1 gezeigten, geschlossenen Stellung über eine in Figur 2 gezeigte Lüfterstellung in eine in Figur 3 gezeigte, ausgestellte Stellung gebracht werden. In der Lüfterstellung ist der in Fahrtrichtung gesehen hintere Rand des Deckels 10 nach außen ausgestellt, während der vordere Rand des Deckels im Wesentlichen unverändert am vorderen Rand der Dachöffnung anliegt. In der nach außen ausgestellten Stellung ist der Deckelhalter so weit nach außen angehoben, dass der Deckel 10 nach hinten verfahren werden kann, wodurch die ihm zugeordnete Dachöffnung freigegeben wird.

Eine Anforderung an alle Schiebedachsysteme unabhängig von der konkreten Ausführung des Verstellmechanismus besteht darin, dass der Deckel in vertikaler Richtung, also der z-Richtung, möglichst stabil gehalten ist, wenn der Deckel sich in der geschlossenen Stellung und auch in der Lüfterstellung befindet. Aufgrund der Strömungsverhältnisse im Dachbereich wirkt auf die Vorderkante des Deckels nämlich ein Unterdruck ein, der den vorderen Deckelrand nach oben zu ziehen versucht. Dies würde, wenn der Deckel nicht stabil gelagert ist, dazu führen, dass der vordere Rand des Deckels über den benachbarten Dachbereich hervorsteht. Hieraus würden unerwünschte Strömungsgeräusche resultieren.

Ein Schiebedachsystem gemäß dem Oberbegriff des Anspruchs 1 ist aus der DE 10 2006 060 019 A1 gezeigt. Am Deckelhalter ist ein Vorsprung vorgesehen, der unter einen Haken am Schlitten greifen kann.

Die Aufgabe der Erfindung besteht darin, ein Schiebedachsystem der eingangs genannten Art dahin gehend weiterzubilden, dass der vordere Rand des Deckels in vertikaler Richtung am Fahrzeug besonders präzise gehalten ist.

Zur Lösung dieser Aufgabe ist bei einem Schiebedachsystem gemäß dem Oberbegriff des Anspruchs 1 vorgesehen, dass das deckelhalterseitige Verriegelungselement an einem Gleitelement angebracht ist, das in der Führungsschiene verschiebbar gelagert ist, und dass das Gleitelement am vorderen Ende des Deckelhalters angebracht ist. Die Erfindung beruht auf dem Grundkonzept, im Bereich des vorderen Randes des Deckels eine mechanische Verriegelung vorzusehen, die unmittelbar vom Schlitten betätigt wird. Solange sich der Schlitten in einer nach vorne vorgeschobenen Stellung befindet, greifen die Verriegelungselemente ineinander ein, so dass der vordere Rand des Deckels nicht nach oben gezogen werden kann. Erst wenn der Schlitten sich im Laufe seiner Steuerbewegung ausreichend weit nach hinten verstellt hat, wird die Verriegelung gelöst, und der Deckel kann in üblicher Weise verstellt werden. Der Vorteil dieser Verriegelung besteht darin, dass keine zusätzlichen Betätigungsvorrichtungen erforderlich sind, um die Verriegelung durchzuführen. Weiterhin besteht der Vorteil darin, dass der Deckelhalter unmittelbar (über den Schlitten) an der Führungsschiene verriegelt wird, so dass keine externen Toleranzen ins Spiel kommen, beispielsweise aufgrund der Montage der Führungsschiene am Fahrzeugdach. Auch muss nach einer Einstellung der korrekten Position der Führungsschiene relativ zum Dach die Verriegelung nicht neu eingestellt werden.

Vorzugsweise ist vorgesehen, dass eines der Verriegelungselemente eine Öffnung ist und das andere ein Vorsprung, der in die Öffnung eingefahren werden kann. Auf diese Weise ergibt sich ein mechanisch einfacher Aufbau.

Vorzugsweise ist die Öffnung am Deckelhalter vorgesehen, und der Vorsprung ist starr am Schlitten angebracht. Dies ermöglicht, die Schiebebewegung des Schlittens unmittelbar dazu zu verwenden, den Vorsprung in die Öffnung am Deckelhalter hineinzuschieben.

Gemäß einer bevorzugten Ausführungsform ist vorgesehen, dass der Vorsprung eine Anlagekante aufweist, die relativ zur Verstellrichtung des Schlittens schräg angestellt ist. Auf diese Weise kann im verriegelten Zustand eine Vorspannung auf den Deckelhalter aufgebracht werden.

Gemäß einer Ausführungsvariante ist vorgesehen, dass der Vorsprung durch zwei parallel zueinander angeordnete Arme gebildet ist. Auf diese Weise kann auch in der y-Richtung eine Vorspannung erzeugt werden, wenn der Vorsprung in die Öffnung eingeschoben wird.

Die Erfindung wird nachfolgend anhand einer Ausführungsform beschrieben, die in den beigefügten Zeichnungen dargestellt ist. In diesen zeigen:
- Figur 1 in einer Seitenansicht das aus der EP 2 072 304 A bekannte Schiebedachsystem in einer schematischen Seitenansicht, wobei sich der Deckel in einer geschlossenen Stellung befindet;
- Figur 2 das Schiebedachsystem von Figur 1, wobei sich der Deckelhalter in einer Lüfterstellung befindet;
- Figur 3 das Schiebedachsystem von Figur 1, wobei sich der Deckelhalter in einer nach außen ausgestellten Position befindet;
- Figur 4 in einer schematischen Explosionsansicht einen Teil der Bauteile eines erfindungsgemäßen Schiebedachsystems;
- Figur 5 in einer schematischen, abgebrochenen Ansicht den am Schlitten verriegelten Deckelhalter;
- Figur 6 eine Ansicht entsprechend Figur 5, wobei der Deckelhalter geschnitten gezeigt ist;
- die Figuren 7 bis 12 ein erfindungsgemäßes Schiebedachsystem in einer schematischen Seitenansicht in verschiedenen Stadien des Übergangs von einem geschlossenen in einen geöffneten Zustand.

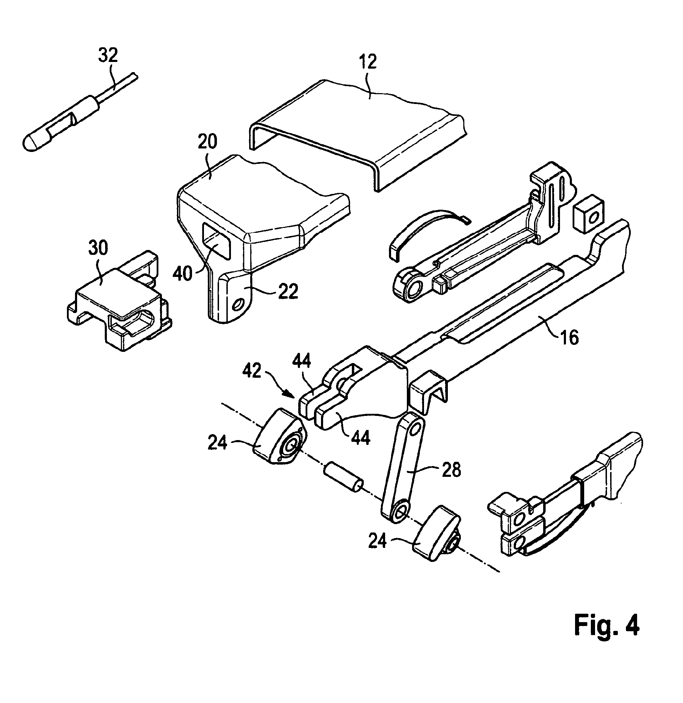

Anhand der Figuren 4 bis 7 wird nun das erfindungsgemäße Schiebedachsystem erläutert.

Der Deckelhalter 12, der beispielsweise als Blechbiegeteil ausgeführt sein kann, ist mit einem Gleitelement 20 versehen, das am vorderen Ende des Deckelhalters 12 angebracht ist. Das Gleitelement ist mit einem nach unten ragenden Fortsatz 22 versehen, an dem zwei Gleitsteine 24 schwenkbar angebracht sind. Die Gleitsteine 24 greifen in eine Führungskulisse 26 der Führungsschiene 14 ein.

Mit dem Gleitelement 20 ist über ein Verbindungselement 28 der Schlitten 16 gekoppelt. Der Schlitten 16 wird in der Führungsschiene 14 verstellt durch einen Mitnehmer 30, an dem ein hier schematisch angedeutetes Antriebskabel 32 angreift.

Die weiteren Bauteile wie Verriegelungshebel, Federn, etc. sind für die grundsätzliche Funktionsweise ohne Bedeutung und werden daher nicht weiter erläutert.

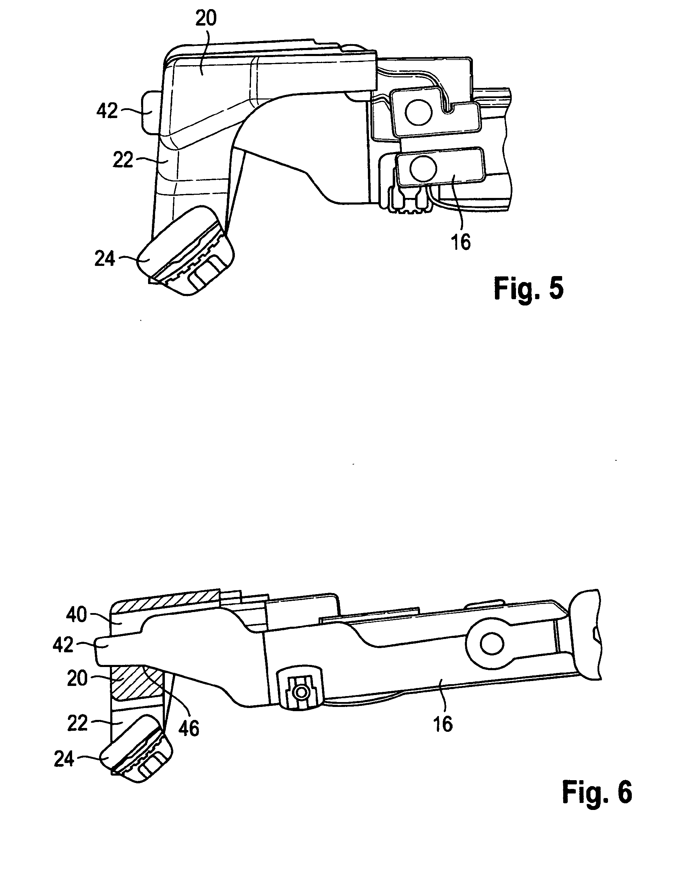

Das Gleitelement 20 ist mit einer in Längsrichtung durchgehenden Öffnung 40 (siehe auch Figur 6) versehen, die als ein Verriegelungselement wirkt. Weiterhin ist der Schlitten 16 an seinem in Fahrzeuglängsrichtung gesehen vorderen Ende mit einem Vorsprung 42 versehen, der ebenfalls als ein Verriegelungselement wirkt. Bei der hier gezeigten Ausführungsform ist der Vorsprung 42 durch zwei sich parallel zueinander erstreckende Arme 44 gebildet. Wie insbesondere in Figur 6 zu sehen ist, ist der Vorsprung 42 so ausgestaltet, dass er sich durch die Öffnung 40 hindurch erstrecken kann. Dabei wirkt der unten liegende Rand des Vorsprungs 42 als Anlagekante 46 (siehe Figur 6), die am Rand der Öffnung 40 des Gleitelements 20 anliegt. In Figur 6 ist auch zu sehen, dass die Anlagekante 46, bezogen auf die Längsrichtung des Schlittens und damit auf die Verschieberichtung des Schlittens, leicht schräg angestellt ist.

Wenn sich das Schiebedachsystem in der geschlossenen Stellung befindet, greift der Vorsprung 42 am Schlitten 16 in die Öffnung 40 im Gleitelement des Deckelhalters 12 ein, sodass die Anlagekante 46 entweder das Gleitelement 20 berührt oder diesem mit sehr geringem Abstand gegenüberliegt. Auf diese Weise ist verhindert, dass der Deckelhalter 12 im Bereich des Gleitelementes 20 (und damit der Deckel 10 an seinem vorderen Rand) nach oben bewegt werden kann, also in der positiven z-Richtung. Etwaige Kräfte, die auf den vorderen Rand des Deckels wirken und diesen nach oben zu ziehen suchen, werden über das Gleitelement 20 und die Anlagekante 46 am Vorsprung 42 des Schlittens 16 unmittelbar in die Führungsschiene 14 eingeleitet; ein vertikales Verschieben des Deckels nach außen ist somit zuverlässig verhindert.

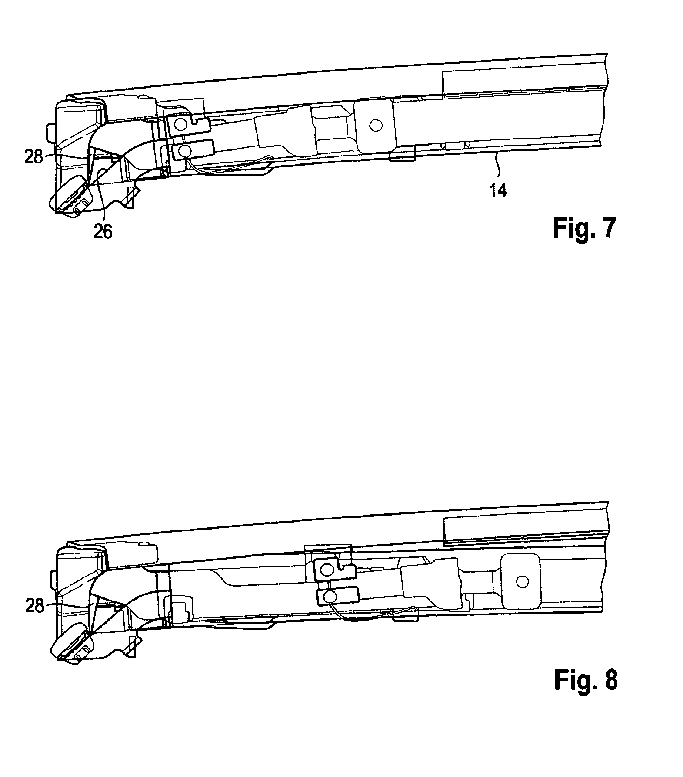

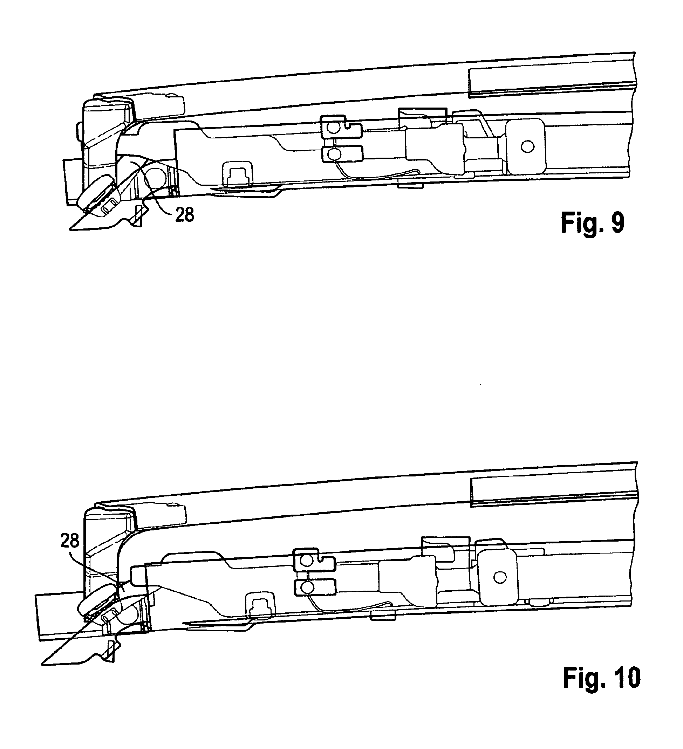

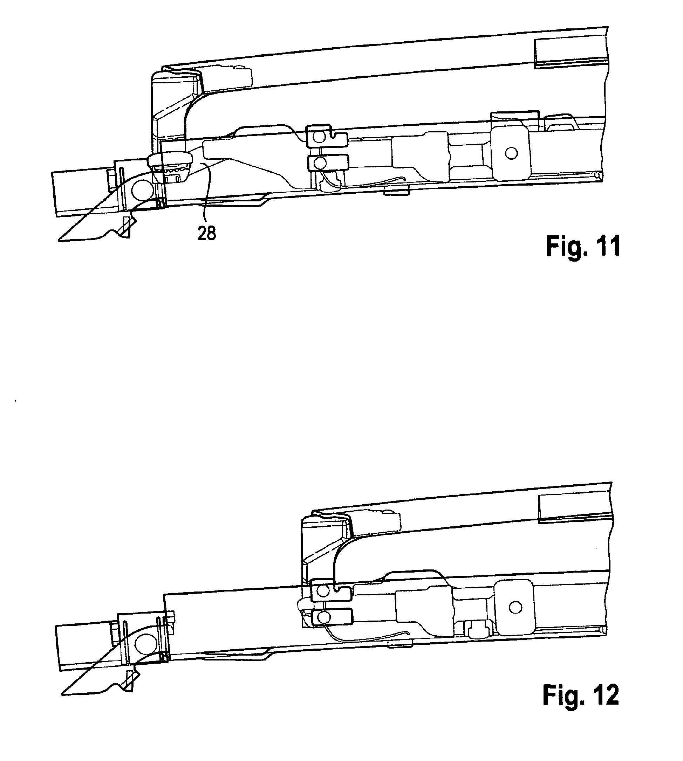

Wenn das Schiebedachsystem betätigt wird, um den Deckel in die ausgestellte Position zu bringen (siehe Figur 8), verbleibt der Deckelhalter an seinem vorderen Ende in der abgesenkten Position, in welcher der Vorsprung 42 weiterhin in die Öffnung 40 des Gleitelements 20 eingreift. Erst eine fortgesetzte Betätigung des Schiebedachsystems führt dazu, dass der Schlitten 16 nach hinten verstellt wird (siehe Figur 9), bis er schließlich so weit nach hinten verschoben ist, dass der Vorsprung 42 sich von der Öffnung 40 gelöst hat und das Gleitelement 20 des Deckelhalters 12 frei in der Führungsschiene 14 zuerst schräg nach oben (vgl. den Bewegungsablauf in den Figuren 8, 9 und 10) und schließlich weiter nach hinten (siehe Figur 11) verschoben werden kann, bis schließlich der Deckelhalter 12 zusammen mit dem (in diesen Figuren nicht dargestellten) Deckel 10 weiter nach hinten verschoben werden kann (siehe Figur 12).

Beim Schließen des Deckels erfolgt der Bewegungsablauf in der umgekehrten Richtung: kurz vor Erreichen der geschlossenen Stellung wird das Gleitelement 20 des Deckelhalters 12 am vorderen Rand der Führungsschiene abgesenkt, und der Vorsprung 42 wird in die Öffnung 40 des Gleitelements 20 eingeschoben, sobald der Schlitten 16 in den Bereich seiner vorderen Endstellung gelangt. Dadurch ist der vordere Rand des Deckels 10 wieder zuverlässig in vertikaler Richtung arretiert.

Der besondere Vorteil der auf diese Weise erzielten Verriegelung durch den Eingriff des Vorsprungs 42 in die Öffnung 40 besteht darin, dass sie automatisch durch die Verstellung des Schlittens 16 realisiert wird. Eine separate Betätigung ist nicht erforderlich.

## Patentansprüche

1. Schiebedachsystem für ein Kraftfahrzeug, mit mindestens einer Führungsschiene (14), einem Deckelhalter (12), der relativ zur Führungsschiene (14) verstellbar ist, und einem Schlitten (16), der in der Führungsschiene (14) verschiebbar ist, wobei am Schlitten (16) und am Deckelhalter (12) jeweils ein Verriegelungselement (40, 42) vorgesehen ist, die zumindest dann ineinander eingreifen, wenn sich der Deckelhalter (12) in der geschlossenen Stellung befindet, **dadurch gekennzeichnet, dass** das deckelhalterseitige Verriegelungselement (40) an einem Gleitelement (20) angebracht ist, das in der Führungsschiene (14) verschiebbar gelagert ist, und dass das Gleitelement (20) am vorderen Ende des Deckelhalters (12) angebracht ist.

2. Schiebedachsystem nach Anspruch 1, **dadurch gekennzeichnet, dass** eines der Verriegelungselemente eine Öffnung (40) ist und das andere ein Vorsprung (42), der in die Öffnung (40) eingefahren werden kann.

3. Schiebedachsystem nach Anspruch 2, **dadurch gekennzeichnet, dass** die Öffnung (40) am Deckelhalter (12) vorgesehen und der Vorsprung (42) starr am Schlitten (16) angebracht ist.

4. Schiebedachsystem nach Anspruch 2 oder Anspruch 3, **dadurch gekennzeichnet, dass** der Vorsprung (42) eine Anlagekante (46) aufweist, die relativ zur Verstellrichtung des Schlittens (16) schräg angestellt ist.

5. Schiebedachsystem nach einem der Ansprüche 2 bis 4, **dadurch gekennzeichnet, dass** der Vorsprung (42) durch zwei parallel zueinander angeordnete Arme (44) gebildet ist.

## Claims

1. A sliding roof system for a motor vehicle, comprising at least one guide rail (14), a cover holder (12) which is adjustable relative to the guide rail (14), and a slide (16) which is shiftable in the guide rail (14), the slide (16) and the cover holder (12) each having a locking member (40, 42) provided thereon, which engage into each other at least when the cover holder (12) is in the closed position, **characterized in that** the locking member (40) on the cover holder side is fitted to a sliding member (20) which is mounted for sliding movement in the guide rail (14), and **in that** the sliding member (20) is fitted to the front end of the cover holder (12).

2. The sliding roof system according to claim 1, **characterized in that** one of the locking members is an opening (40) and the other is a projection (42) which can be transferred into the opening (40).

3. The sliding roof system according to claim 2, **characterized in that** the opening (40) is provided on the cover holder (12) and the projection (42) is rigidly fitted to the slide (16).

4. The sliding roof system according to claim 2 or claim 3, **characterized in that** the projection (42) includes an abutment edge (46) which is set obliquely relative to the adjustment direction of the slide (16).

5. The sliding roof system according to any of claims 2 to 4, **characterized in that** the projection (42) is formed by two arms (44) arranged parallel to each other.

## Revendications

1. Système de toit ouvrant pour véhicule automobile, comportant au moins un rail de guidage (14), un support de couvercle (12) qui peut être ajusté par rapport au rail de guidage (14), et un chariot (16) qui peut être déplacé dans le rail de guidage (14), un élément de verrouillage (40, 42) respectif étant prévu sur le chariot (16) et sur le support de couvercle (12), lesquels s'engagent l'un dans l'autre au moins lorsque le support de couvercle (12) se trouve dans la position fermée, **caractérisé en ce que** l'élément de verrouillage (40) côté support de couvercle est monté sur un élément coulissant (20) qui est monté déplaçable dans le rail de guidage (14), et **en ce que** l'élément coulissant (20) est monté à l'extrémité avant du support de couvercle (12).

2. Système de toit ouvrant selon la revendication 1, **caractérisé en ce que** l'un des éléments de verrouillage est un orifice (40) et l'autre est une saillie (42) qui peut être insérée dans l'orifice (40).

3. Système de toit ouvrant selon la revendication 2, **caractérisé en ce que** l'orifice (40) est prévu sur le support de couvercle (12) et **en ce que** la saillie (42) est agencée de façon rigide sur le chariot (16).

4. Système de toit ouvrant selon la revendication 2 ou la revendication 3, **caractérisé en ce que** la saillie (42) présente une arête de butée (46) qui est agencée en oblique par rapport au sens d'ajustage du chariot (16).

5. Système de toit ouvrant selon l'une des revendications 2 à 4, **caractérisé en ce que** la saillie (42) est formée par deux bras (44) agencés de façon parallèle l'un par rapport à l'autre.
